Europäisches Patentamt

European Patent Office

Office européen des brevets

(11) Publication number: **0 414 972 A1**

# EUROPEAN PATENT APPLICATION

(21) Application number: **89308890.6**

(51) Int. Cl.5: **G01B 3/10**

(22) Date of filing: **01.09.89**

(43) Date of publication of application:
**06.03.91 Bulletin 91/10**

(84) Designated Contracting States:
**AT BE CH DE ES FR GR IT LI LU NL**

(71) Applicant: **FANFARE ELECTRONICS LIMITED**
**Park Lorne 111 Park Road**
**Regents Park London NW8 7JL(GB)**

(72) Inventor: **Rinberg, Anthony**

**4 Ventnor Drive**
**Totteridge London, N20 8BP(GB)**
Inventor: **Goldberg, Stephen**
**Park Lorne 111 Park Road**
**Regents Park London, NW8 7JL(GB)**

(74) Representative: **Brown, John David et al**
**FORRESTER & BOEHMERT**
**Widenmayerstrasse 4/I**
**W-8000 München 22(DE)**

(54) **Electronic tape measure.**

(57) There is provided a tape measure, said tape measure comprising a housing associated with a measuring strip having measuring indicia marked thereon, means being provided to retract the measuring strip into the housing, means being provided to determine the length of strip extracted from the housing, and an associated display arrangement to display a numerical value equal to or calculated from the measured length of strip withdrawn from the housing.

FIG 1

EP 0 414 972 A1

## IMPROVEMENTS IN OR RELATING TO A TAPE MEASURE

THE PRESENT INVENTION relates to a tape measure and more particularly to a tape measure of the type as utilised by a builder or handyman.

Many tape measures have been proposed for use by builders and handymen, and a typical tape measure consists of a thin strip of spring steel which is associated with a retractor mechanism adapted to retract the strip into a coil within a housing. The tape measure may be pulled out of the housing against a bias provided by a biassing spring. The steel strip carries markings and gradations to enable the strip to be utilised as a ruler. It is sometimes difficult to utilise such a device to measure lengths accurately, and the present invention seeks to provide an improved tape measure which enables accurate measurements to be made easily.

According to this invention there is provided a tape measure, said tape measure comprising a housing associated with a measuring strip having measuring indicia marked thereon, means being provided to retract the measuring strip into the housing, means being provided to determine the length of strip extracted from the housing, and an associated display arrangement to display a numerical value equal to or calculated from the measured length of strip withdrawn from the housing.

Preferably the display comprises at least one liquid crystal display.

Preferably the display comprises two display elements, one on one face of the housing and another on an orthogonally directed face of the housing.

The tape measure may be adapted to operate in two modes, in one mode the tape measure providing an indication of the length between the free end of the strip withdrawn from the housing and the face of the housing defining an aperture through which the strip is withdrawn therefrom, and in another mode providing an indication of the distance between the free end of the strip withdrawn from the housing and the face of the housing facing away from the face of the housing defining the aperture through which the strip emerges therefrom.

Preferably the tape measure incorporates a calculator adapted to perform calculations, incorporating into those calculations measurements measured by the tape measure.

Preferably the tape measure further comprises means for multiplying two measured lengths together. More preferably if the product of the two measured lengths is less than a predetermined value, it is displayed in relatively small units, whereas if it is greater than the predetermined value it is displayed in relatively large units.

More preferably the tape measure further comprises means for multiplying together three successive measurements. Preferably if the product of the three measurements is less than a predetermined value, it is displayed in relatively small units, whereas if it is greater than a predetermined value it is displayed in relatively large units.

More preferably the lengths displayed may be displayed in imperial measurements or in metric measurements.

Preferably when a length of strip has been withdrawn from the housing, the display may be zeroed, the display then indicating the value and direction of further movements of the strip.

Preferably the tape measure further comprises means for manually adjusting a displayed value by small increments.

Preferably the tape measure further comprises means for storing, in a memory, a predetermined measurement, and to measure and display variations from that predetermined measurement.

Preferably the means for measuring the length of tape withdrawn from the housing comprise means for generating electrical signals in response to movement of the tape and means for processing these signals. In one embodiment the signal generating means responds to movement of a jockey wheel, the jockey wheel being driven in response to movement of the tape. Preferably the tape is provided with a plurality of apertures therein, the jockey wheel being provided with a plurality of spikes thereon engageable with the apertures in the tape, the tape being constrained to lie adjacent part of the periphery of the jockey wheel. More preferably the tape is constrained to lie adjacent the periphery of the jocket wheel by means of a guide plate pressing the tape against the jockey wheel. It is preferable that each spike on the jockey wheel is surrounded by an annular recess. The jockey wheel may drive a slave wheel, the slave wheel carrying a signal of generating means.

In a further embodiment the signal generating means are capacitive and a stationary part has a plurality of sectors each with a different signal applied thereto, and an adjacent moving part has at least one conductive area capable of covering a predetermined portion of said sectors and means for extracting a signal from said conductive area. Preferably the stationary part is a circular stator with a plurality of peripheral sectors, spaced by an earthing area from an inner signal extracting area, the moving part comprising a rotor having a plurality of angularly spaced peripheral conductive areas each adapted to cover a predetermined number of sectors of the stator, and connected to a central conductive ring for extracting said signal. Alternatively the tape of the tape measure is provided with a conductive track forming said moving part and comprising a plurality of relatively large conductive areas inter-connected by a signal track, the stationary part comprising a stator provided with a plurality of sectors located adjacent the track, and means to read from the track a signal capacitively coupled thereto.

A still further embodiment provides that the signal generating means are magnetic and that Hall effect devices are provided adapted to read magnetic areas which move in response to movement of the tape. Preferably adjustment magnets are provided movably located adjacent the Hall effect devices. More preferably the adjustable magnets are located in internally threaded tubes so that the position of each magnet may be adjusted by rotating the magnet relative to the tube. The Hall effect devices may be located adjacent a slave wheel driven rotationally by a jockey wheel. Alternatively the tape may be provided with means carrying a magnetic signal, there being a magnetic reading head associated with the tape. The means carrying the magnetic signal are so configured that the direction of tape movement can be determined from signals generated thereby.

In yet another embodiment the signal generating means are inductive and two inductive coils are provided, the tape being provided with a plurality of inserts of conductive material passing through an area which is common to the field of each coil. Preferably the inserts are so configured that the direction of tape movement can be determined from signals generated thereby.

Preferably the signal generating means are optical and more preferably comprise means which present moving indicia in response to movement of the tape and means to read the indicia. Preferably the indicia comprise bars on the tape of the tape measure. It is preferred that the tape measure further comprises means which are biassed movably to engage the tape to lock the tape and prevent withdrawal thereof from the housing. Preferably said engaging means are biassed by a wedge or cam which can be moved manually to release the tape. More preferably said wedge or cam is adapted to move in response to manual deformation of part of the casing.

In order that the invention may be more readily understood, and so that further features thereof may be appreciated, the invention will now be described, by way of example, with reference to the accompanying drawings in which,

FIGURE 1 is a top plan view of a tape measure in accordance with the invention with part of the tape withdrawn from the housing,

FIGURE 2 is a side view of the tape measure of Figure 1 with the tape retracted,

FIGURE 3 is a view corresponding to Figure 2 but with a door, forming part of the casing, being opened,

FIGURE 4 is a rear exploded view of the tape measure,

FIGURE 5 is a cross-sectional view of a tape cassette,

FIGURE 6 is a cross-sectional view of the tape measure on the line VI-VI of Figure 1 showing the position of the door in solid and in phantom lines,

FIGURE 7 is a cross-sectional view of the tape measure taken on the line VII-VII of Figure 1, but with the tape substantially retracted into the housing,

FIGURE 8 illustrates diagrammatically one arrangement for measuring the length of tape withdrawn from the housing,

FIGURE 9 is an enlarged view of the end portion of the tape for use with the arrangement shown in Figure 8,

FIGURE 10 illustrates one pair of wave forms representing output signals from the measuring device of Figure 8,

FIGURE 11 illustrates another pair of wave forms representing output signals from the measuring device of Figure 8,

FIGURE 12 is a block diagram of the circuitry associated with the measuring device of Figure 8,

FIGURE 13 is a diagrammatic view of a display for use with the embodiment of the invention illustrated in Figures 1 to 8,

FIGURE 14 illustrates part of a modified embodiment of the invention in which the tape is wound round a jockey wheel,

FIGURE 15 is an enlarged view of part of the periphery of the jockey wheel,

FIGURE 16 illustrates a jockey wheel arrangement incorporating a Hall effect device,

FIGURE 17 illustrates a jockey wheel arrangement in which inductive coupling is utilised,

FIGURE 18 illustrates a stator forming part of the arrangement of Figure 17,

FIGURE 19 illustrates a rotor forming part of the arrangement of Figure 17,

FIGURE 20 illustrates wave forms representing signals applied to various sectors of the stator of Figure 18,

FIGURE 21 illustrates a further reading head and a modified tape for use with the reading head,

FIGURE 22 illustrates diagrammatically a further embodiment of the invention of an optical nature, and

FIGURE 23 is a circuit diagram of the electron ic circuitory of the embodiment of Figures 1 to 13.

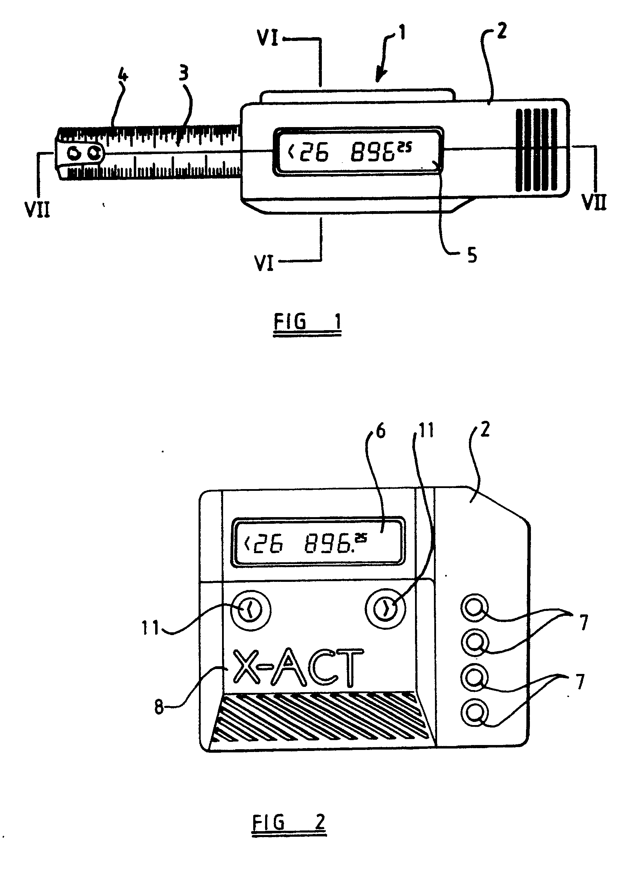

Referring initially to Figures 1 to 13 of the present invention a tape measure 1 consists of a housing 2 which contains a spring steel tape 3 which is withdrawn into the housing by means of a spring-biassed retractor mechanism, but which can be pulled out of the housing, against the bias of the spring biassed retractor to enable measurements to be made. As can be seen from Figure 1, the spring steel tape 3 is provided, on one surface, with markings or gradations 4 to enable appropriate measurements to be made. In the illustrated embodiment the markings and gradations comprise an imperial scale, in terms of inches and feet, and a metric scale, in terms of centimetres and metres.

As thus far described the tape measure is conventional.

However, the tape measure 1, in accordance with the invention, is provided with means for determining the length of tape withdrawn from the housing, and for displaying, upon at least one display screen, the amount of tape withdrawn from the housing of the tape measure, or a value calculated from the amount of tape withdrawn from the housing.

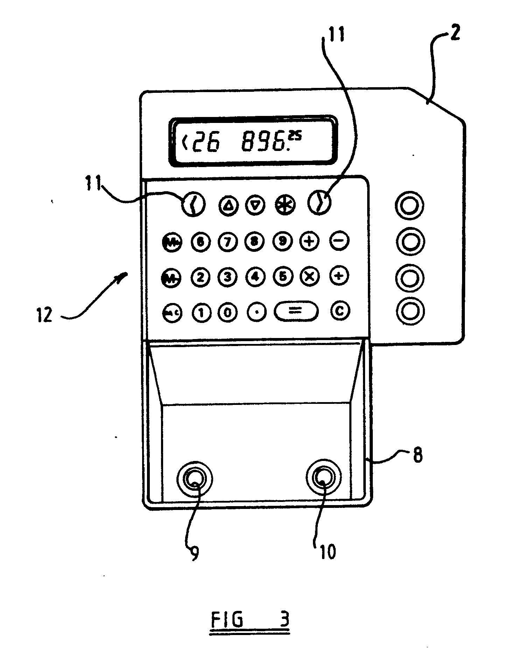

As can be seen from Figures 1 and 2, the housing 2 is provided with two display screens, each of the liquid crystal display type, a first display screen 5 being located on the top of the housing 2, as can be seen in Figure 1, and a second display screen 6 being provided on an orthogonal side face of the housing 2, as can be seen in Figure 2. Various push buttons 7 are provided on the exposed face of a housing 2 as can be seen in Figure 2. The LCD's could be replaced by LED's or other suitable display types.

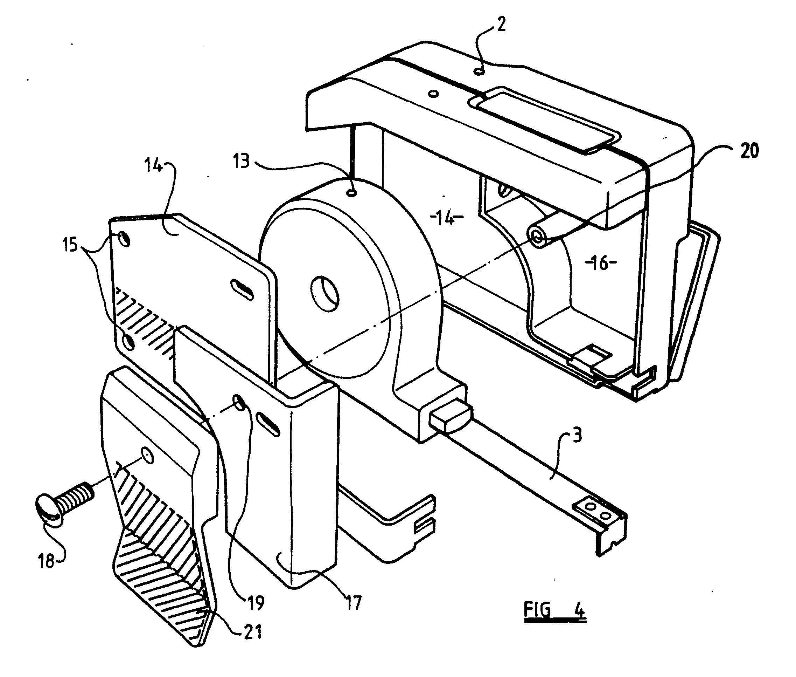

The face of the housing 2 is provided with a hinged cover or door 8, which is shown in a hinged down position in Figure 3. The door 8 is provided with two apertures 9,10 therein to provide access to push buttons 11 whilst the door is in a closed condition. However, when the door is in the open condition, as shown in Figure 3, it can be seen that the door covers a plurality of push buttons 12 which form a key pad. As will become clear from the following description the key pad is associated with a calculator which can perform calculations which can incorporate directly measurements taken with the tape measure.

Turning now to Figure 4 of the drawings it can be seen that the housing 2 comprises a hollow shell which receives a cassette 13 which accommodates the tape 3 and a retractor spring. The cassette 13 may be slidably inserted into an appropriate recess 14 formed within the housing. Subsequently a back cover plate 14 may be slidably mounted in position, and may be secured in position by means of screws passing through appropriate apertures 15, to retain the cassette 13 in position. A further cavity 16 defined within the housing is dimensioned to receive a conventional battery, and a battery cover 17 is provided which may be located in position to cover up the recess 16. A single screw 18 passes through an aperture 19 in the battery cover 17 and into a screw-threaded bore provided in a mounting post 20 within the recess 16 to mount the battery cover 17 into position. A spring clip 21 may be located between the head of the screw 18 and the battery cover 17, the spring clip forming a belt clip to enable the described tape measure to be readily mounted in position on a belt.

It will be appreciated that by simply removing the screw 18, the spring clip 21 and the battery cover 17 may be removed thus enabling a battery within the cavity 16 to be readily replaced. Should the tape become damaged, or should any other component of the cassette 13 become damaged, by removing the cover 14 the cassette may be removed from the described tape measure and may be replaced by a fresh cassette.

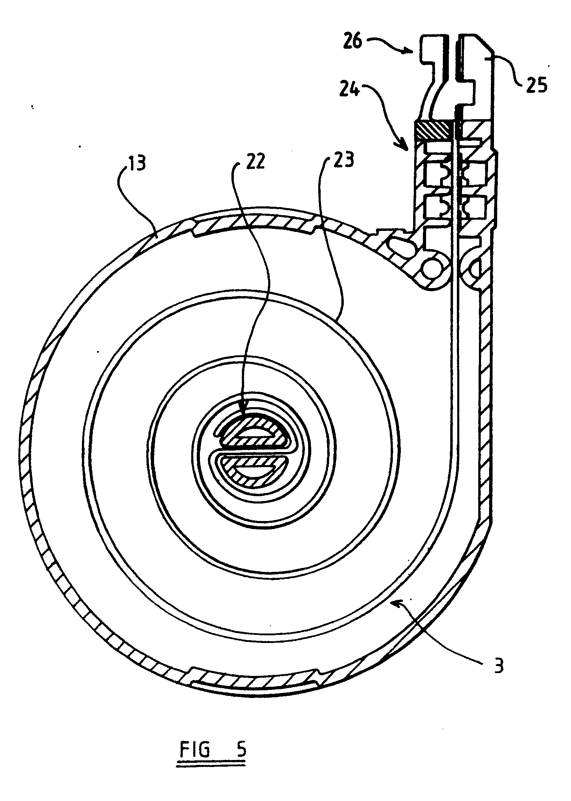

Figure 5 illustrates the cassette 13 in cross-section. It can be seen that the centre part of the cassette defines an anchoring portion 22 which receives one end of a resilient spiral spring 23. The other end of the spring is connected to the tape 3 which then emerges from the cassette. The tape passes a reading zone 24, which will be described hereinafter in greater detail, and then emerges from the interior of the cassette passing between a fixed finger 25 and a resiliently mounted finger 26.

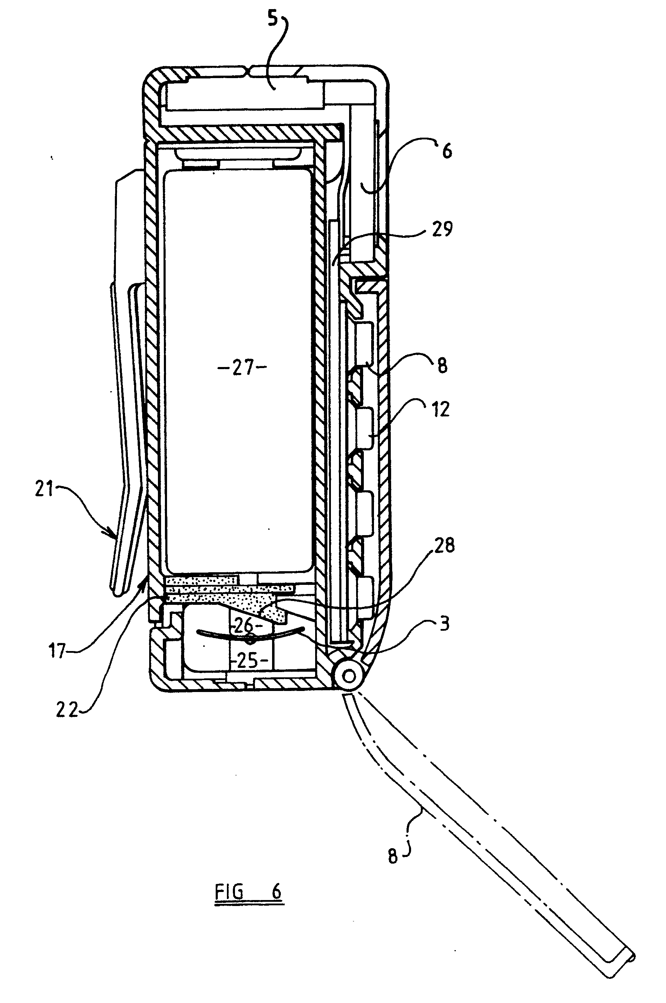

As can be seen from Figure 6, which illustrates a battery 27 within the recess 16, the lower most edge of the battery cover 17 can flex inwardy and outwardly. Normally the battery cover is flexed to an outer position. A cam member 22 is formed integrally with the battery cover 17, the cam member having an inclined cam portion 28 which engages an upper surface of the spring finger 26. The lower surface of the spring finger 26 is arcuate, to correspond with the arcuate form of the steel strip 3. The lower finger 25 has an arcuate upper surface. The arrangement is such that since the battery cover is usually biassed outwardly due to its natural resilience, the cam face 28 engages a finger 26 and forces that finger downwardly so that the lower surface firmly clamps the steel tape 3 between the lower surface of that finger 26 and the upper surface of the lower finger 25. Thus the steel tape is normally locked in position. However, if the lower part of the battery cover is pressed inwardly, the cam face 28 will move to the right as shown in Figure 6 thus permitting the upper arm 26 to move resiliently upwardly, thus releasing the steel tape 3. If the cam is not fully clamped, then a return spring will be required.

Figure 6 illustrates the door 8, showing how the door can be moved from a closed condition as illustrated in solid lines to an open condition as shown in phantom. Figure 6 also illustrates various push buttons of the key pad 12 showing how these buttons are associated with an underlying printed circuit board 29. The two liquid crystal displays 5 and 6 are also shown in Figure 6.

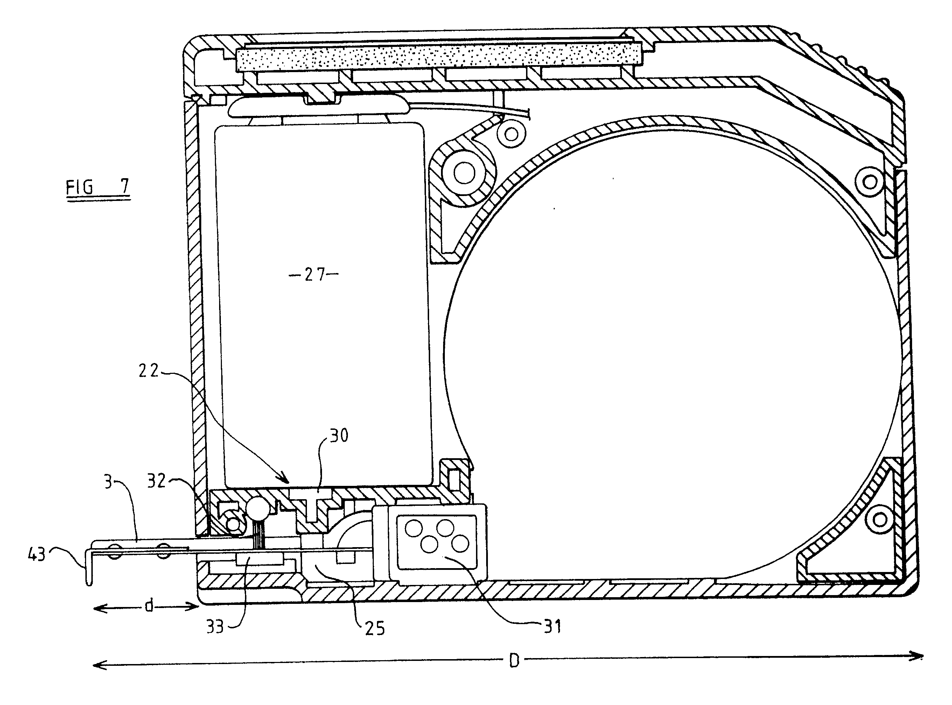

Figure 7 again illustrates the battery, and shows the cam member 22. As can be seen more clearly in Figure 7 the cam member is guided for axial movement along a "T" shaped guide 30.

Figure 7 illustrates further features of the invention, in particular a plurality of electric contacts 31 provided on the cassette for contact with the printed circuit board 29. Also illustrated is a fibre brush 32 and an associated foam pad 33 between which the steel strip 3 passes. The pad 33 could be alternatively formed of a hard plastics material or fibre brush.

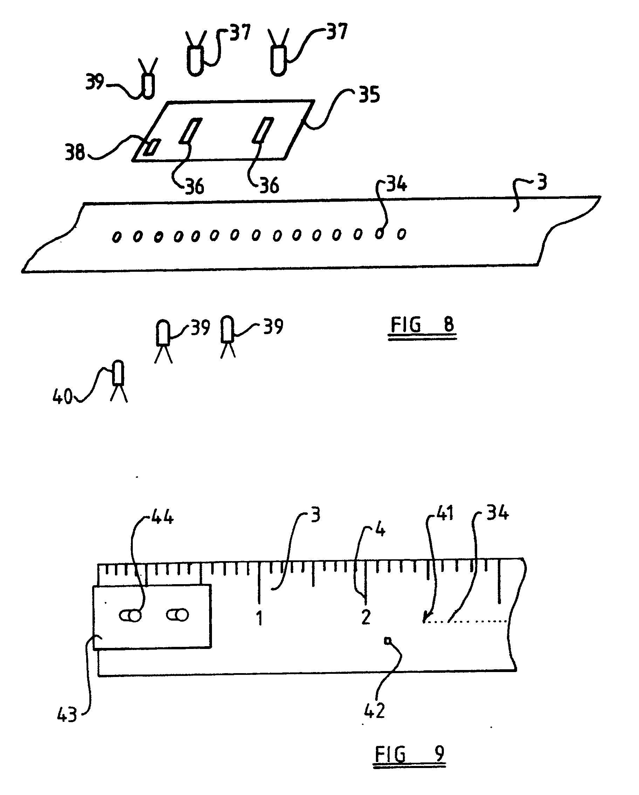

As has been mentioned, the tape measure in accordance with the invention is provided with means to determine the length of tape withdrawn from the housing. In the presently described embodiment of the invention the means for determining the length of tape withdrawn from the housing is essentially an optical arrangement. The tape 3, as can be seen more clearly in Figure 8, is provided with a plurality of small holes 34 which are formed in the housing. Preferably the holes have a one millimetre spacing and a half millimetre diameter, but thus dimensions will depend on the accuracy required.

Located below the tape 3 in the reading zone 24 is a mask 35 which defines two spaced apart parallel slits 36. Each slit has a width which is preferably less than the diameter of each hole. Preferably the width of each slot is between one-third and one-twentieth of the diameter of each hole, most preferably between one-seventh and one-tenth of the diameter of each hole.

The two slits 36 are spaced apart by a spacing which is equal x plus or minus one quarter times the centre spacing between the holes 34, where x is a whole number. Thus the spacing between the slits 36 is equal to the spacing between the number of the holes 34 plus one quarter of the spacing between two further holes.

Located below the slits 36 are respective light emitting diodes 37 which preferably emit infrared light. Diodes 37 could be replaced by means emitting visible light, for example filament lamps.

The mask 35 may define a further aperture 38, which is off-set from the slits 36, which may be associated with a further light emitting diode 39.

On the topside of the tape 3 are provided two photosensitive devices, in the form of photosensitive transistors 39 substantially aligned with the slits 36 and, if the further aperture 38 and light emitting diode 39 are provided, a further photosensitive transistor 40 may be provided, aligned with the aperture 38, for error correction. Each photosensitive transistor may be associated with a Schmitt trigger to provide a clean signal.

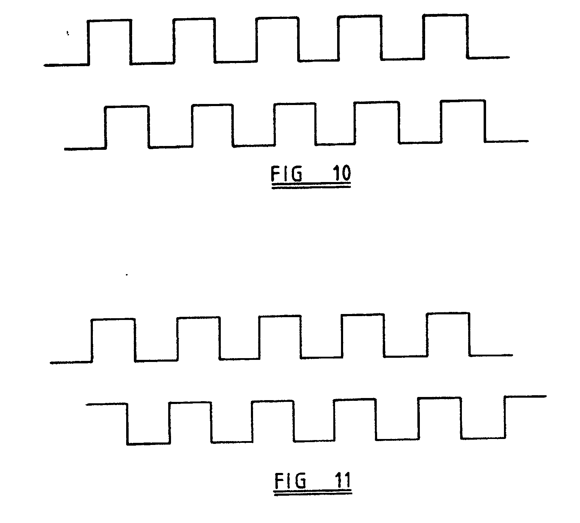

Figure 9 illustrates a terminal portion of the tape 3. It can be seen that the apertures 34 commence at a point 41 which is spaced, from the end of the tape, by a predetermined distance. Located a short distance towards the end of the tape is a single aperture 42 in an off-set position.

The end of the tape 3 is provided with a conventional end piece 43 which is slidingly mounted on rivets 44 to enable the end piece to measure internal and external dimensions easily.

It is to be understood that when the described tape measure is not in use, the tape 3 will be fully retracted into the housing, and the aperture 42 formed in the tape will then be co-aligned with the aperture 38 in the mask 35.

The light emitting diode 39 may be caused to emit brief pulses of light at predetermined time intervals, for example once every three or four seconds. Provided that the light sensitive transistor 40 responds to these pulses of light, the tape measure may remain in a quiescent state. However, if the tape measure is to be used, initially a length of tape may be withdrawn from the tape measure and maintained withdrawn from the tape measure for a brief period of time. During this brief period of time the light emitting diode 39 will emit a pulse of light which will not be detected by the photosensitive transistor 40. This occurrence will activate the device, and the light emitting diode's 37 will be activated, and the display devices 5,6 will also be activated.

The tape may then be released and the tape will be fully withdrawn into the housing, and at this stage further pulses will be supplied to the light emitting diode 39, on a relatively frequent basis, so that the light emitting diode emits a stream of light pulses. As soon as the tape is then withdrawn from the housing, the aperture 42 in the tape 3 will no longer be aligned with the aperture 38 in the mask 35 and thus the photosensitive transistor 40 will not receive any more of these pulses. However, the light emitting diodes 37 will be constantly illuminated, and as soon as the first aperture at the point 41 passes the first slit 36, the photosensitive transistor 39 will receive a pulse of light, thus providing a signal indicative that a predetermined amount of tape has been withdrawn from the housing, this amount of tape being dependent upon the precise relative position of the end of the tape 3 and the point 41, and the precise position of the measuring device as illustrated in Figure 8 relative to the edge of the housing 2.

As the tape continues to be withdrawn, the apertures 34 will pass both of the slits 36, and both the photosensitive transistors 39 will receive intermittent pulses of light as the apertures 34 pass the respective slits 36, and will provide output signals as illustrated in Figure 10. The upper row of signals corresponds to the output of the right-hand photosensitive transistor 39 and the second row of signals corresponds to the output of the left-hand photosensitive transistor 39. It can be seen that two square wave signals are provided, with a regular repeating pattern. It can be seen, that if the upper signal is taken, for every 360° cycle of that upper signal, there are two changes of state, and also during the same period of time there are two changes of state of the lower signal. In other words there is a change of state every 90°. Since one wave length one complete cycle is equivalent to the passage of the tape by one millimetre it can be seen that it is possible to determine, from the illustrated wave forms, the precise position of the tape with an accuracy of one quarter millimetre.

If the tape is subsequently permitted to retract into the housing the wave forms take the form as illustrated in Figure 11, which is distinguishable from the wave form of Figure 10. It is thus possible to determine, by analysing the wave forms, the direction of movement of the tape 3, and by counting the number of pulses, the distance of such movement.

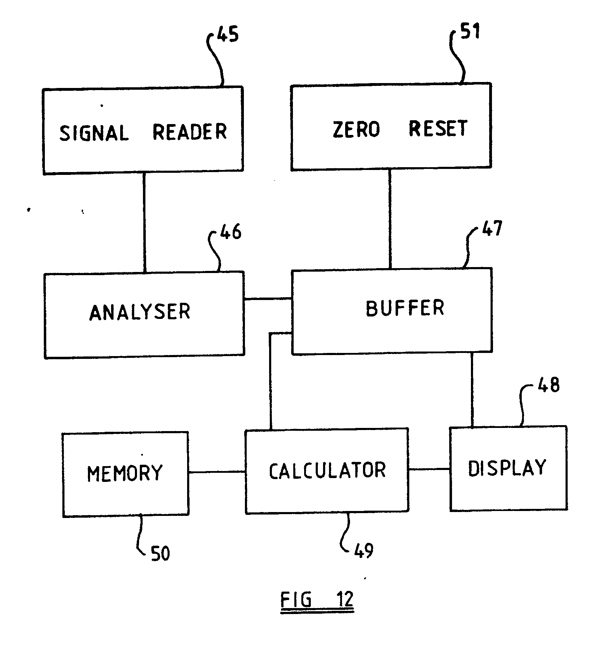

The illustrated components 35 to 40, as shown in Figure 8, together form a signal reader, which is illustrated as signal reader 45 in the block diagram that forms Figure 12. Signals from the signal reader are fed to an analyser 46 which effectively determines the length of tape corresponding to the signals read by the signal reader. A value of a length of tape is fed to a buffer 47, and the contents of the buffer may be displayed on the display 48 which effectively comprises the two liquid crystal displays 5 and 6 mentioned above. However, information from the buffer is also fed to a calculator 49 which is associated with a memory 50. A zero re-set 51 is associated with the buffer 47. This may be operated by pressing one of the push buttons 7.

The various components of the block diagram illustrated in Figure 12 will actually be embodied as a micro-processor. The Schmitt triggers for the photosensitive transistors may comprise trigger circuits which are activated by the microprocessor.

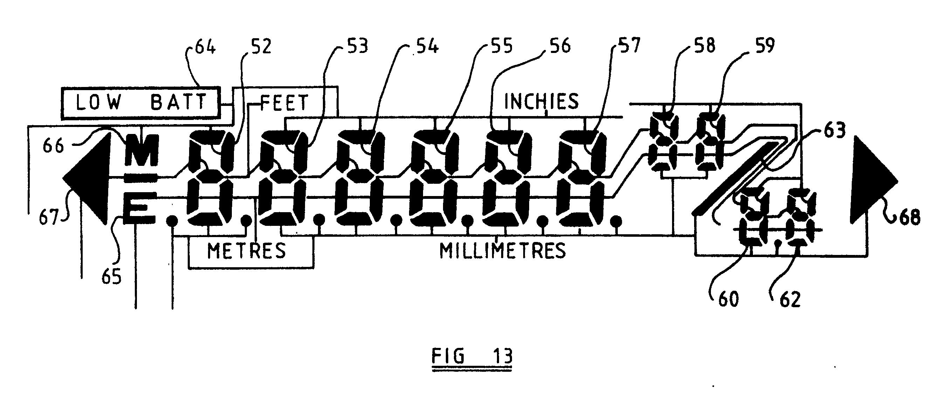

Figure 13 illustrates one of the liquid crystal displays 5 or 6. It can be seen that the display comprises six main digits 52 to 57. The two right-hand digits 52 and 53 may be used to indicate a measured length in terms of metres, the three right-hand digits indicating the numbers of millimetres. Alternatively the three left-hand digits 52,53,54 may be utilised to indicate a measured distance in terms of feet, with the two right-hand digits 56 and 57 indicating the inches.

It can be seen that the display comprises four further digits 58,59,60,62 separated by a substantially horizontal bar 63. These digits may be utilised to express parts of inches or parts of millimetres, as decimals or fractions.

There is a low battery indicator 64 which indicates when the battery needs to be replaced, and other indicia 65 to indicate when an error may have occurred and 66 to indicate when information is stored in the memory 50 that is associated with the calculator 49.

Two further triangular indicia 67,68 are provided to indicate when an internal or an external measurement is being effective.

It is to be understood that primarily the display present on the display device is the length of tape withdrawn from the housing, that is to say the length between the free end of the tape 3 and the wall of the housing defining the aperture through which the tape emerges from the housing. Referring to Figure 7 this distance is illustrated as the distance "d". This distance the preferred distance when measuring items such as, for example, planks of wood where the front face of the housing may be engaged with one end of the plank and the end piece 43 provided on the tape may be engaged with the other end of the plank. However, if the device is to be utilised for measuring, for example, the width of a room, it is preferred to be able to measure the distance between the end piece 43 on the tape and the rear face of the housing, that is to say the distance shown as "D" in Figure 7. Thus, in the described embodiment of the invention, by manipulating appropriate push buttons 7 it is possible to add, automatically, to the initially measured distance, a dimension equal to the difference between "d" and "D".

From the foregoing it will be appreciated that the described tape measure may provide an indication in terms of feet and inches or in terms of metres and millimetres. Appropriate control buttons 7 are provided to enable the scale of measurement to be selected.

The described tape measure may have various other features found to be of significant value. For example, a specific button 7 may be provided which, when pressed, will multiply a preceding measurement by a following measurement. This enables area to be calculated. If the button is again pressed the sum, representative of area, is again multiplied by the following measurement, to provide an indication of volume. When area or volume have been determined, in this way, the display will either display the area or volume in terms of square feet or in terms of square inches (or cubic feet or cubic inches) or in terms of square metres or square millimetres (or cubic metres or cubic millimetres) depending upon the absolute size of the calculated area or volume. An indication of the units of the displayed measurement will be given. Thus, in other words, when a square area or volume have been calculated, the calculated value is compared with a predetermined standard, and if it is in excess of that standard it is displayed in terms of relatively large units, i.e. feet or metres whereas, if it is smaller than the standard it will be displayed in terms of relatively small units, namely inches or millimetres.

It is possible, utilising the preferred em bodiment of the invention, to add or subtract successive measurements. It is also possible, utilising a preferred embodiment of invention, to enter a predetermined measurement as a standard measurement, and then utilise the tape measure to measure variations from that standard. For example, if it is desired to select planks of wood that are precisely two metres long, the tape measure may be set to two metres, either by withdrawing the tape until two metres is shown on the display screen and then pressing an appropriate button, or by keying in two metres utilising the key pad. The tape measure may then be utilised effectively to measure planks, but the display on the display screen will be the difference between the measured length of the plank and the desired length of two metres.

By pressing appropriate buttons it is possible to increment or decrement displayed measurements by units of 0.25 millimetres, or by units of one thirty-second of an inch. This may enable a measured value to be "rounded up" or "rounded down" before a calculation is performed on the basis of that measurement.

It is possible, when a length of tape has been withdrawn from the housing, to press a button which will cause the zero re-set 51 to operate. This will effectively zero the value in the buffer, causing the displays to move to zero. The displays will then indicate positive or negative values depending upon the relative movement of the tape.

Whilst one embodiment of the invention has been described it is to be appreciated that many modifications may be effected.

For example, in the described embodiment, it may be found that when the tape is withdrawn from or re tracted into the housing very rapidly, the signal reader may not be able to read accurately all the signal changes, since it will be appreciated that there are four signal changes to be measured for each millimetre of extraction of the tape. Thus, when the tape is moving very swiftly, it may be preferred merely to count the number of apertures passing between one light emitting diode and the associated photosensitive transistor. As a precaution the number of apertures passing the other light emitting diode and associated photosensitive transducer may also be measured. It is believed that this may facilitate the measuring task, enabling the measuring task to be carried out at a higher operative frequency. If desired, further apertures corresponding to the off-set aperture 42 may be provided at predetermined points along the length of the tape, these acting as "calibration" marks. In such an embodiment by determining the frequency of pulses in the pulse trains it is possible to determine the speed of movement of the tape, and to enter the correct operational mode, depending on the speed of the tape.

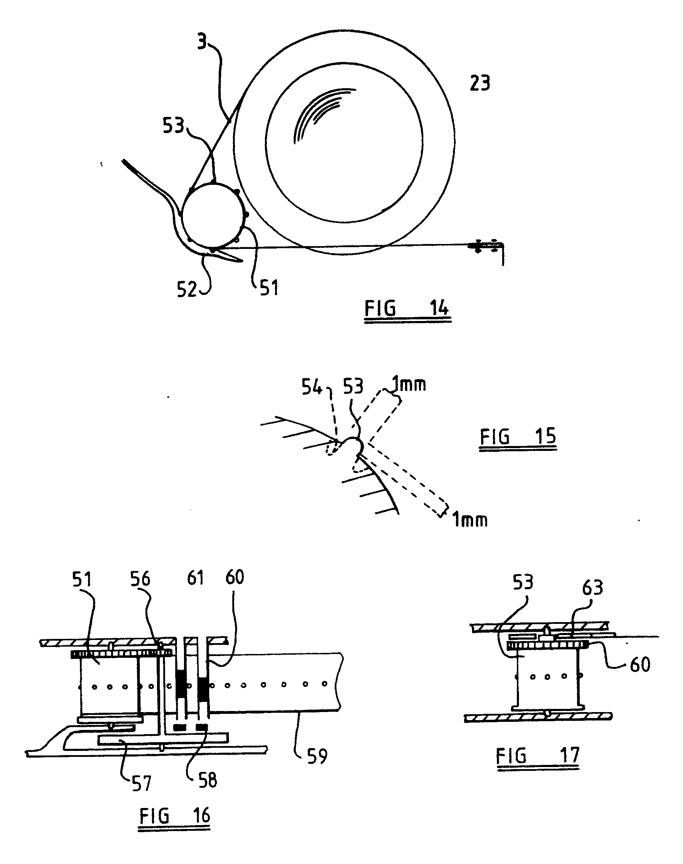

In the embodiment of the invention as described, the measurement relating to the length of tape withdrawn was taken directly from the tape. However, it is envisaged that it may be advantageous to take the measurement of tape withdrawn from a jockey wheel which rotates as the tape is withdrawn. For example, Figure 14 schematically illustrates part of a modified embodiment of the invention in which the spring tape 3 is associated with a retractor spring 23, the tape 3 passing round a jockey wheel 51. The tape is pressed against the outer periphery of the jockey wheel by a resilient finger 52. The jockey wheel is provided with a plurality of spikes 53 which pass through apertures formed in a tape.

As can be seen from Figure 15 each spike 53 formed on the jockey wheel has a one millimetre diameter and a one millimetre height so that it passes into the holes formed in the tape 3, but in this case the holes may be much further apart than in the previously described embodiment. Each spike 53 is surrounded by an annular recess or depression 54 which serves to collect dust or the like.

The jockey wheel 51 may be provided with apertures therein associated with light emitting diodes and photosensitive transistors corresponding to those described above. However, with a jockey wheel alternative methods of measuring may be utilised. For example, as illustrated in Figure 16, the jockey wheel 51 may carry gearing 55 which engages with further gearing 56 driving a slave wheel 57. The slave wheel 57 may be magnetised, and may thus have alternate radially extending angularly evenly spaced regions of different magnetic polarity. Two Hall effect devices 58 may be located adjacent the periphery of the magnetised wheel 57, and the Hall effect devices 58 may be associated with preliminary adjusting magnets 59 mounted in tubes 60, the tubes being internally threaded so that by inserting a screw driver and twisting the magnets, as illustrated by the arrows 61, the position of each magnet 59 may be adjusted in order to "zero" the Hall effect devices.

The Hall effect devices will again be separated by a predetermined distance and it will be appreciated, therefore, that as the jockey wheel 51 rotates, and as the slave wheel 57 thus rotates in synchronism, output signals from the Hall effect devices will be obtained which are very similar to the output signals illustrated in Figures 10 and 11. The Hall effect deevices could be replaced by, for example, coils.

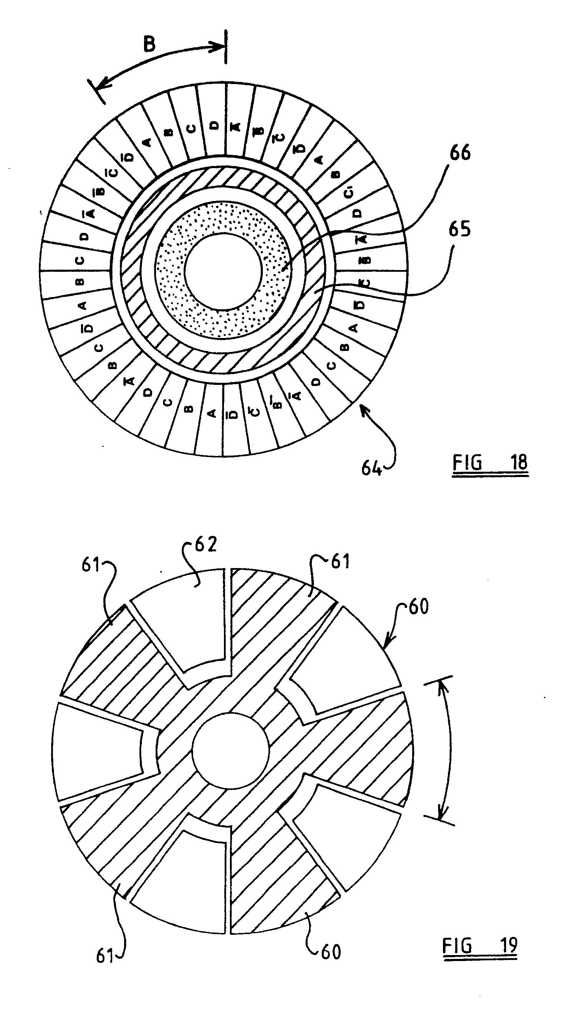

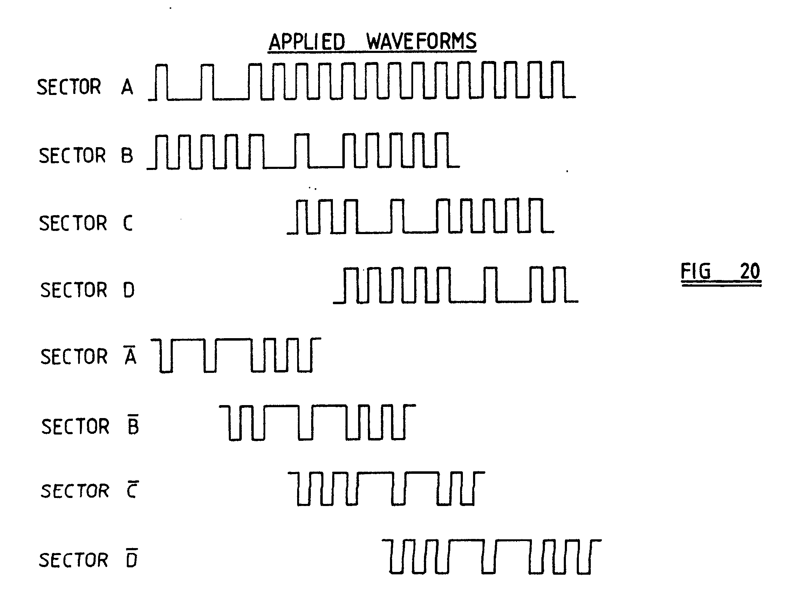

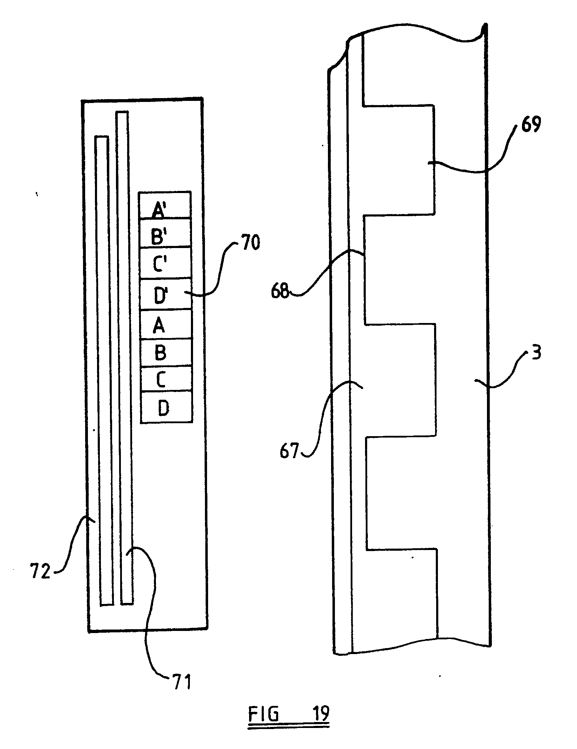

Figure 17 illustrates a further modified embodiment of the invention, which again utilises a jockey wheel 53, the jockey wheel 53 carrying, on one end, a rotor 60, having a configuration as illustrated in Figure 19. It can be seen that the rotor has five main conductive areas 61 adjacent the periphery of the rotor, these areas being spaced apart by non-conductive areas 62. Fixedly mounted adjacent the rotor but spaced therefrom by a very short distance is a stator 63. The stator 63 is shown in Figure 18. The stator 63 is provided with a plurality of areas adjacent the outer periphery, forming five separate groups of eight areas. One group of eight areas is indicated by the reference numeral 64 and it can be seen that these areas are successively identified by the reference letters A to D and A' to D'. Located at a radially inner position relative to these outer areas is an annular conductive area 65 which is maintained at earth potential and a further radially inner-most conductive area 66 which is used as a signal collector area.

The stator and the rotor face each other across a very short distance and are thus capacitively coupled.

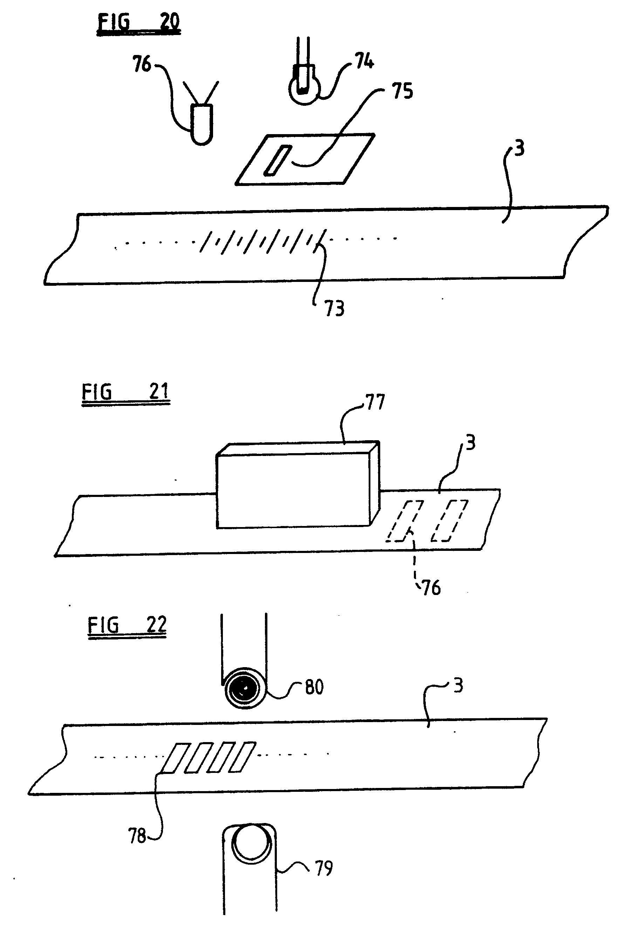

A plurality of wave forms are applied to the various sectors A'D and A' to D', and the wave forms of these signals are shown in Figure 20. It can be seen that each wave form is of a different form, and the wave form applied to any one sector is the precise reverse of the wave form applied to the sector spaced 4 sectors from it.

Each conductive area 61 will overlie four sectors, and each conductive area will overlie four sectors of the same identity. Thus the signals present on those four sectors will be capacitively coupled to the conductive area 61. The signals will thus pass the earthing element 65 and will be capacatively coupled to the inner conductive area 66. It will be appreciated, for example, that when the conductive areas 61 overlie the sectors A to D, a predetermined signal will be present. However, when the conductive areas overlie the sectors B to D and A' a very different signal will be present. It will thus be appreciated that for each very small change in the angular position of the rotor relative to the stator a different signal will be present on the inner conductive region 66. By analysing the signals present on the inner conductive region 66 the relative rotation between the rotor and the stator can be monitored, and thus again the length of tape withdrawn from the housing can be determined.

The techniques described above, intended for use with a jockey wheel may be utilised in a linear manner. Thus, as illustrated in Figure 19, the tape 3 itself may be formed of a non-conductive material and may have formed on it a conductive element 67 comprising an elongate conductive track 68 extending the whole length of the measure interconnecting various enlarged regions 69. A reading head for use for the tape 19 may have a plurality of sectors 70 arranged in a linear manner, but corresponding to the sector 64 of Figure 18, and carrying similar signals. The arrangement will also include an earthing element 71 and a signal collecting region 72. Thus the arrangement as shown in Figure 19 will operate utilising the same basic theory as the arrangement illustrated in Figures 18 to 20.

Of course, further techniques may be utilised both in connection with a direct reading technique, reading directly from the extracted tape, or reading from a jockey wheel. These techniques include optical techniques, magnetic techniques and inductive techniques. For example, as illustrated in Figure 20, the tape 3 may have printed thereon a bar code 73 which can be illuminated by a light source 74 and an associated colimating slit 75, the illuminated part of the bar code being read, for example by means of a photosensitive transistor 76. The bars of the bar code may be so configured that it is possible to determine, from signals received from the photosensitive transducer 76, the direction of tape movement. Thus the bar code may consist of three successive bars of different widths so that the order of receipt of the signals corresponding to bars of different widths may be indicative of the direction of movement of the strip 3. Of course, two arrangements as illustrated in Figure 20 may be provided at spaced apart intervals to provide signals to be measured in quadrature as with the first described embodiment.

Figure 21 illustrates a tape 3 provided with various magnetised regions 76, there being an associated magnetic reading head 77, corresponding to a reading head as found in a tape recorder or the like. Of course, there may be two magnetic reading heads 77 spaced apart in order to provide a signal to be read in quadrature, as in the embodiment described with reference to Figure 8.

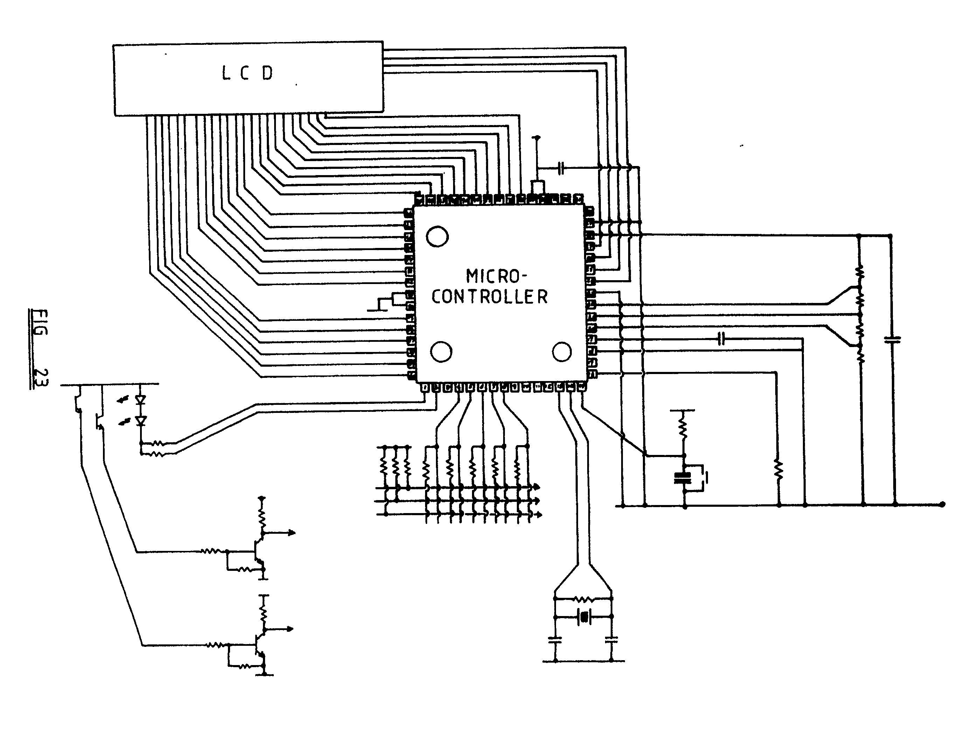

Figure 22 illustrates a further modified embodiment of the invention in which the tape 3, again formed of insulating material, as formed therein a plurality of conductive regions 78. Two coils 79,80 are provided located adjacent the tape. A signal is supplied to one coil 79 which creates a field, and the second coil 80 has a corresponding field induced in it. The magnitude of the field induced in the coil 80 depends upon the presence or absence of the conductive regions 78. Thus, as the tape is moved, again signals are generated indicative of the movement of the tape.

In both of the embodiments shown in Figures 21 and 22 the shape of the inserts may be such that signals will be generated having a different nature depending upon the direction of movement of the tape 3. Thus the illustrated inserts may have different widths, for example.

The features disclosed in the foregoing description, in the following claims and/or in the accompanying drawings may, both separately and in any combination thereof, be material for realising the invention in diverse forms thereof.

## Claims

1. A tape measure, said tape measure comprising a housing associated with a measuring strip having measuring indicia marked thereon, means being provided to retract the measuring strip into the housing, means being provided to determine the length of strip extracted from the housing, and an associated display arrangement to display a numerical value equal to or calculated from the measured length of strip withdrawn from the housing.

2. A tape measure according to Claim 1 wherein the means for measuring the length of tape withdrawn from the housing comprise means for generating electric signals in response to movement of the tape, and means for processing those signals.

3. A tape measure according to Claim 2 wherein the signal generating means are optical.

4. A tape measure according to Claim 2 wherein the signal generating means are magnetic.

5. A tape measure according to Claim 2 wherein the signal generating means are capacative.

6. A tape measure according to Claim 2 wherein the signal generating means are inductive.

7. A tape measure according to any one of Claims 2 to 6 wherein the signal generating means respond directly to movement of the tape.

8. A tape measure according to Claim 3 or 7 wherein the optical signal generating means comprise a plurality of apertures which are moved, in response to movement of the tape, between at least one light source and at least one light sensitive device, the light sensitive device providing an output signal when each aperture passes between the light source and the light sensitive device.

9. A tape measure according to Claim 8 wherein two light sources and two light sensitive members are provided at spaced apart positions.

10. A tape measure according to Claims 8 or 9 wherein the or each light source comprise a light emitting diode.

11. A tape measure according to any one of Claims 8 to 10 wherein two light sources are provided, the light sources being spaced apart by a distance equivalent to an integral multiple of the spacing between the holes plus one quarter of the spacing between the holes.

12. A tape measure according to Claim 11 wherein said plurality of holes are provided in the strip of the tape, and the light sources comprise light emitting diodes and associated colimating slits, the width of each colimating slit being less than the diameter of each hole.

13. A tape measure according to Claim 12 wherein the width of each slit is between one-third and one-twentieth of the diameter of each hole.

14. A tape measure according to Claim 12 wherein the width of each slit is between one-seventh and one-tenth of the diameter of each hole.

15. A tape measure according to any one of Claims 12 to 14 wherein the apertures formed in the strip are at one millimetre spacing and each have a substantially half millimetre diameter.

16. A tape measure according to Claim 5 or 7 wherein a stationary part has a plurality of sectors each with a different signal applied thereto, and an adjacent moving part has at least one conductive area capable of covering a predetermined portion of said sectors and means for extracting a signal from said conductive area.

17. A tape measure according to Claim 4 or 7 wherein Hall effect devices are provided adapted to read magnetic areas which move in response to movement of the tape.

18. A tape measure according to Claim 6 or 7 wherein two inductive coils are provided, the tape being provided with a plurality of inserts of conductive material passing through an area which is common to the field of each coil.

FIG 1

FIG 2

FIG 3

FIG 4

EP 0 414 972 A1

FIG 5

FIG 6

FIG 7

FIG 8

FIG 9

FIG    10

FIG    11

FIG 12

EP 0 414 972 A1

LOW BATT — FEET INCHIES

M
E

METRES MILLIMETRES

FIG 13

FIG 14

FIG 15

FIG 16

FIG 17

FIG 18

FIG 19

## APPLIED WAVEFORMS

SECTOR A

SECTOR B

SECTOR C

SECTOR D

SECTOR $\overline{A}$

SECTOR $\overline{B}$

SECTOR $\overline{C}$

SECTOR $\overline{D}$

FIG 20

EP 0 414 972 A1

FIG    19

FIG 20

76 74 75

3

73

FIG 21

77

3

76

FIG 22

80

3

78

79

FIG   23

European Patent
Office

**EUROPEAN SEARCH REPORT**

Application Number

EP 89 30 8890

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 807 171 (PRÜFTECHNIK DIETER BUSCH + PARTNER GMBH & CO.) <br> * Figures 1-3; page 3, line 33 - page 7 * | 1,2,3,4,7 | G 01 B 3/10 |
| X | WO-A-8 800 776 (CARE) <br> * Figures 1-7; page 5, line 24 - page 15 * | 1,2,3,4,7 | |
| X | GB-A-2 171 508 (RABONE CHESTERMAN LTD) <br> * Figures 1-15; page 2, line 15 - page 5, line 54 * | 1,2,3,4,7 | |
| X | GB-A-2 102 121 (SONIC TAPEL PLC) <br> * Figures 1,2; page 1, line 79 - page 2, line 5 * | 1,2,3,4,7 | |
| X | GB-A-2 169 399 (KYOTO MEASURING INSTRUMENTS CORP.) <br> * Figures 1-8; page 2, line 20 - page 4, line 13 * | 1,2,3,7 | |
| X | FR-A-2 410 251 (THE STANLEY WORKS) <br> * Page 5, line 10 - page 40; figures 1-14 * | 1,2,3,7 | TECHNICAL FIELDS SEARCHED (Int. Cl.5) <br><br> G 01 B |
| X | PATENT ABSTRACTS OF JAPAN, vol. 9, no. 224 (P-387)[1947], 10th September 1985; & JP-A-60 82 901 (SEKISUI JIYUSHI K.K.) 11-05-1985 <br> * Whole document * | 1,2,4,17 | |
| X | US-A-4 575 944 (LIN) <br> * Column 2, line 16 - column 4; figures 1-4 * <br> ---       -/- | 1,2,3,7,8 | |

The present search report has been drawn up for all claims

| Place of search | Date of completion of the search | Examiner |
|---|---|---|
| THE HAGUE | 20-04-1990 | BATTESON A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

EUROPEAN SEARCH REPORT

Application Number

EP  89 30 8890

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 150 282  (AOKI et al.) <br> * Column 2, line 26 - column 5, line 12; figures 1-6 * | 1,2,3,7 ,8 | |
| X | US-A-4 506 336  (HIRD) <br> * Figures; column 3, line 44 - column 22, line 18 * | 1,2,3,7 | |

TECHNICAL FIELDS
SEARCHED (Int. Cl.5)

The present search report has been drawn up for all claims

| Place of search | Date of completion of the search | Examiner |
|---|---|---|
| THE HAGUE | 20-04-1990 | BATTESON A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document